# EUROPÄISCHE PATENTSCHRIFT

(11) **EP 0 723 734 B1**
(45) Veröffentlichungstag und Bekanntmachung des Hinweises auf die Patenterteilung: **20.05.1998**
(21) Anmeldenummer: 94929472.2
(22) Anmeldetag: 10.10.1994
(51) Int. Cl.: H05B 7/02, H05B 7/06, H05B 7/12

(54) **BODENELEKTRODE FÜR EIN METALLURGISCHES GEFÄSS**
BOTTOM ELECTRODE FOR A METALLURGICAL VESSEL
ELECTRODE DE SOLE POUR CUVE METALLURGIQUE

(30) Priorität: 11.10.1993 DE 4335065
(43) Veröffentlichungstag der Anmeldung: 31.07.1996
(73) Patentinhaber: MANNESMANN Aktiengesellschaft, 40213 Düsseldorf (DE)
(72) Erfinder: BECKER, Lutz, D-47228 Duisburg (DE); SCHAEFERS, Gerhard, D-47445 Moers (DE); FEUERSTACKE, Ewald, D-46282 Dorsten (DE); HOFMANN, Werner, D-47441 Moers (DE)
(74) Vertreter: Presting, Hans-Joachim, Dipl.-Ing.
(86) Internationale Anmeldenummer: DE9401217
(87) Internationale Veröffentlichungsnummer: WO9510929

(56) Entgegenhaltungen:
- EP-A- 0 012 050
- DE-A- 4 026 897
- US-A- 4 628 516
- US-A- 5 125 003

## Beschreibung

Die Erfindung betrifft eine Bodenelektrode für ein mit Gleichstrom betriebenes metallurgisches Gefäß, bestehend aus zwei miteinander verbindbaren, verschiedene Werkstoffe aufweisenden Teilen, von denen das zum Gefäßäußeren weisende, im wesentlichen außerhalb des Gefäßbodens angeordnete Kühlteil von einem Kühlmittel beaufschlagt wird und das zum Gefäßinneren weisende und als Verschleißelement ausgebidete Verschleißteil mit der im Gefäß befindlichen Metallschmelze in Kontakt steht.

Gleichstrom betriebene metallurgische Gefäße, insbesondere Öfen zum Erschmelzen von Schrott, weisen im Bereich des Bodens mindestens eine regelmäßig als Anode ausgebildete Elektrode auf. Diese Bodenelektroden befinden sich während des Schmelzprozesses unterhalb des Flüssigmetallspiegels und sind daher neben der Belastung durch den elektrischen Strom darüber hinaus noch thermischen und chemischen, sowie erosiven Belastungen durch die Schmelze ausgesetzt. Zur Minderung des thermischen Verschleißes werden in der betrieblichen Praxis eine Reihe dieser Bodenelektroden gekühlt.

So ist aus der DE-0S 40 26 897 eine metallische Elektrode bekannt, die die Ofenwand eines Gleichstromlichtbogenofens durchdringt und die im Gefäß befindliche Schmelze berührt, während sie anderenends an elektrische und kühlfluide Versorgungsquellen anschließbar ist. Diese Elektrode besteht aus zwei miteinander verbindbaren Stäben, wobei der die Schmelze beührende Stab aus einem mit dieser vergleichbaren Werkstoff besteht. Während des Betriebes wird die Stirn dieses Stabes durch den Kontakt mit der Schmelze aufgeschmolzen und durch die Badbewegung wegtransportiert.

Aus der EP 0 012 050 ist eine mit einer schmelzflüssigen Metallmasse in Berührung tretende Bodenelektrode bekannt, bei der an der der Schmelze zugewandten Stirn Mittel vorgesehen sind, die in ihrer Nähe die Wärmeströmungsbewegungen der schmelzflüssigen Metallmasse mindern soll. Diese Mittel werden aus einer Vielzahl länglicher Feuerfestteile gebildet, die parallel zueinander angelegt sind und den elektrisch leitenden Körper in Richtung der schmelzflüssigen Masse verlängern. Die feuerfesten Teile können dabei vollständig im elektrisch leitenden Körper versenkt sein.

Die aus dieser Schrift bekannte Verbindungsvorrichtung weist Kühlelemente auf, die tief in die Feuerfestauskleidung des metallurgischen Gefäßes hineinragen. Diese Bodenelektrode weist nicht nur eine andere Bauart auf, die aus arbeitssicherheitstechnischen Gründen bedenklich ist, sie wirkt auch unmittelbar durch den hohen Kühleffekt der in der Nähe des Kopfes angeordneten Kühlelemente unmittelbar auf die Elektrodenspitze. Darüber hinaus ist sie mit dem Nachteil behaftet, daß beim Aufschmelzen des Elektrodenkopfes die länglichen feuerfesten Teile aus dem metallischen Bereich herausgespült werden.

Aus der DE-PS 219 575 ist eine Herdelektrode für elektrische Öfen bekannt, die aus erst bei höherer Temperatur leitendem, kohlenstoffreiem Material besteht, wobei über die ganze, der Elektrode gegenüberliegenden Herdfläche die mit ihr bündig liegenden Enden von die Herdmasse durchdringenden und in eine den Herd tragende Stromzuleitungsplatte eingelassenen Stäben ausEisen oder einem anderen Metall, je nach dem zu behandelnden Material, regelmäßig verteilt sind.

Aus der DE 41 29 756 Al ist ein metallurgisches Gefäß mit einer feuerfesten Auskleidung bekannt, bei dem im Bereich des Gefäßbodens eine Anode einer Gleichstromlichtbogeneinrichtung vorgesehen ist, wobei in das von Feuerfestmaterial freie Ofengefäß an vorbestimmter Stelle ein metallisches besenartiqes Element eingebracht ist, dessen Borsten zum Gefäßinneren gerichtet sind.

Der Erfindung liegt die Aufgabe zugrunde, mit einfachen Mitteln eine instandhaltungsgerechte, regenerierbare und langlebige Bodenelektrode der gattungsgemäßen Art zu schaffen, die bei sicherer Übertragung des elektrischen Stromes positiven Einfluß auf den Verschleiß der sie umgebenden Feuerfestauskleidung hat.

Diese Aufgabe wird durch kennzeichnenden Merkmale des Anspruchs 1 gelöst.

Der Verschleißteil der Bodenelektrode wird dabei in einer Form ausgestaltet, die einerseits einen ausreichenden Stromübergang vom Kühlteil zur Schmelze zuläßt und gleichzeitig die Badbewegung im Bereich der Elektrodenspitze minimiert. Während des Schmelzbetriebes ist die regelmäßig als Anode eingesetzte Bodenelektrode eines mit Gleichstrom betriebenen metallurgischen Gefäßes, insbesondere eines in sumpffahrweise betriebenen Lichtbogenofens, einer extrem hohen thermischen Belastung ausgesetzt. Das führt dazu, daß der mit der Schmelze in Kontakt stehende Kopfbereich der Bodenelektrode aufschmilzt und sich das Elektrodenmaterial mit der im Gefäß befindlichen Schmelze vermischt. Hinzu tritt, daß der in der Schmelze gebundene Sauerstoff sich im Bereich der durch die Bodenelektrode verursachten Abkühlung spontan auslöst, was zu hohen Badbewegungen führt. Hierbei können Geschwindigkeiten im Bereich der Elektrodenspitze bis zu 4 m/sec. auftreten. In Elektrodennähe tritt dadurch ein deutlicher erosiver Verschleiß ein. Die negative Folge hiervon ist eine starke Ausmuldung der Feuerfestauskleidung, die dazu führt, daß noch höhere Strömungsgeschwindigkeiten möglich sind, woraus sich ein noch höherer Verschleiß der Bodenelektrode und des feuerfesten Gefäßbodens ergibt.

Die weitere Ausbildung des Erfindungsgegenstandes geht aus den Merkmalen der Unteransprüche hervor.

Erfindungsgemäß wird vorgeschlagen, dem Verschleißteil der Bodenelektrode eine Form zu geben, die die Strömung der Schmelze des Ofengefäßes und des aus gleichem Werkstoff bestehenden vorderen Teils der Elektrode behindert, gleichzeitig aber sowohl die Wärmeabfuhr aus dem Verschleißteil wie auch die Energiezufuhr des elektrischen Stromes sicherstellt. Zur Verringerung der Strömung des flüssigen Metalls werden folgende wesentlichen Formen vorgeschlagen:
1. Das metallische Bauteil, d.h. der innere Kern der Elektrode ist aus aufeinander gestapelten Zylindern gebildet, wobei in Richtung des im wesentlichen außerhalb des Gefäßbodens angeordneten Kühlteils der jeweilige Zylinderdurchmesser zunimmt.
2. Das metallische Bauteil ist ein parallel zur Mittenachse in Richtung Kühlteil sich vergrößernder Kegelstumpf. Durch die gewählte Form der einzelnen Bauteile wird in vorteilhafter Weise erreicht, daß die Strömungsgeschwindigkeit des Flüssigmetalls drastisch gesenkt und die Aufschmelztiefe des Elektrodenkopfes minimiert wird. Die geringe Strömungsgeschwindigkeit des Flüssigmetalls führt darüber hinaus zu einer deutlichen Minderung der Erosion der feuefesten Auskleidung des Gefäßes.

Ein Beispiel der Erfindung ist in der beigefügten Zeichnung dargelegt. Dabei zeigen:
- Fig. 1: einen Längsschnitt durch die Bodenelektrode
- Fig. 2a, 2b: Querschnitte durch den Verschleißteil der Bodenelektrode.

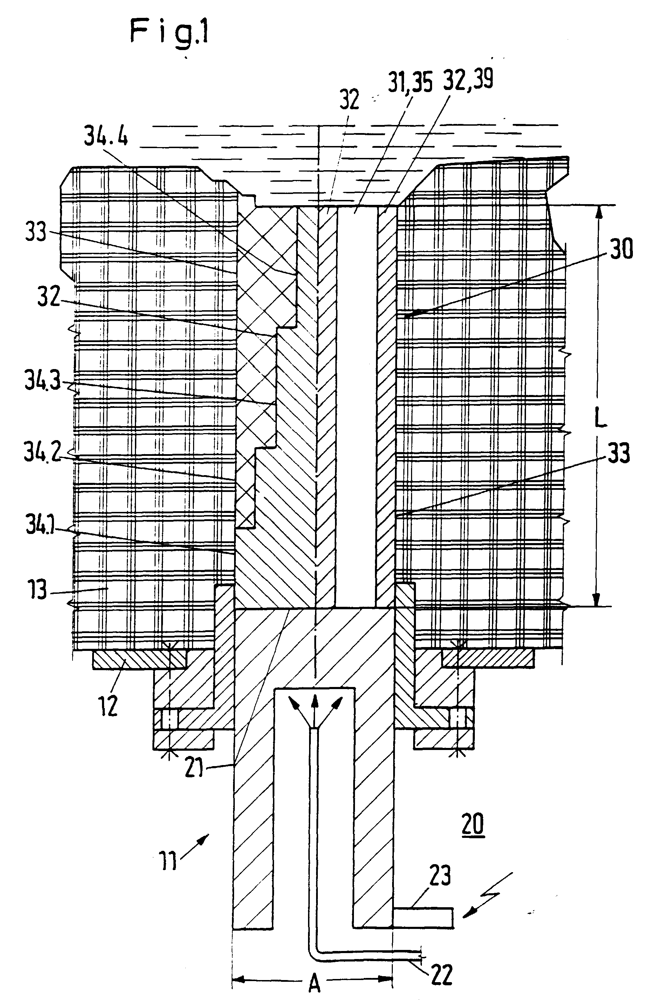

In Fig. 1 ist ein Ausschnitt eines metallurgischen Gefäßes mit einem Gefäßmantel 12 sowie einer Feuerfestauskleidung 13 dargestellt. Durch den Mantel 12 und die Auskleidung 13 ist eine Bodenelektrode 11 geführt. Sie besteht aus zwei miteinander verbindbaren, verschiedene Werkstoffe aufweisenden Teilen 20, 30, von denen das zum Gefäßäußeren weisende, im wesentlichen außerhalb des Gefäßbodens angeordnete Kühlteil 20 von einem Kühlmittel beaufschlagt wird und das zum Gefäßinneren weisende und als Verschleißelement ausgebildete Verschleißteil 30 mit der im Gefäß befindlichen Metallschmelze in Kontakt steht. Das Verschleißteil 30 besteht seinerseits aus zwei Teilen 31, 32, nämlichen einem metallischen Bauteil 32, das überwiegend aus einem mit der Schmelze vergleichbaren Werkstoff besteht und dessen Querschnitt an der Stirn 21 des Kühlteils 20 eine dieser angepaßte Außenkontur 33 besitzt. Dabei hat das metallische Bauteil 32 eine Form, die die Strömung während des Betriebes im Stirnbereich aufgeschmolzenen Elektrodenmaterials wie auch der Metallschmelze behindert.
Das andere Bauteil 31 besteht auch hochtemperaturfestem Werkstoff und besitzt eine mit dem metallischen Bauteil 32 komplementäre Form. Beide Bauteile 31, 32 sind koaxial zur Mittelachse der Bodenelektrode 11 angeordnet. Die Stirnseite 21 des Kühlteils 20 hat die gleiche Querschnittsfläche A wie das Verschleißteil 30.
Im linken Teil der Fig. 1 weist das Verschleißteil 30 eine Form auf, die aus aufeinander gestapelten Zylindern 34.1 bis 34.4 aufgebaut ist, wobei in Richtung des Kühlteils 20 der Durchmesser der Zylinder 34 zunimmt.
Im rechten Teil der Fig. 1 ist das Verschleißteil 30 aus einem hochtemperaturfestem Werkstoff bestehenden Bauteil 31 und einem metallischen Bauteil 32 zusammengesetzt.

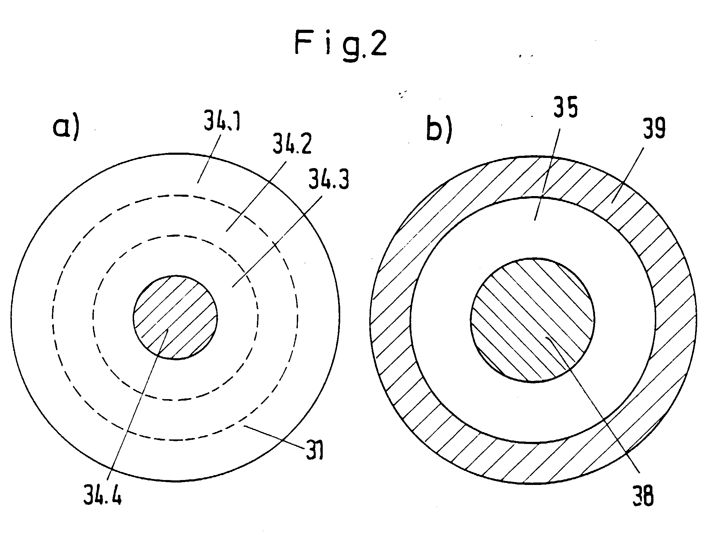

In der Fig. 2 sind Beispiele für die Anordnung für die Anordnung der hochtemperaturfesten Bauteile 31 und der metallischen Bauteile 32 zueinander dargestellt.
Das Beispiel 2a zeigt entsprechend der linken Seite der Fig. 1 ein Verschleißteil 30 mit aus unterschiedliche Querschnitte aufweisenden Zylindern 34.1 bis 34.4 gebildeten Stapel. Das Beispiel 2b zeigt einen zentralen metallischen Stab 38 und eine metallische Hülse 39 und dazwischen eingeschlossen eine hochtemperaturfeste Hülse 35.

## Patentansprüche

1. Bodenelektrode (11) für ein mit Gleichstrom betriebenes metallurgisches Gefäß, bestehend aus zwei miteinander verbindbaren, verschiedene Werkstoffe aufweisenden Teilen (20,30), von denen
- das zum Gefäßäußeren weisende, im wesentlichen außerhalb des Gefäßbodens angeordnete Kühlteil (20) von einem Kühlmittel beaufschlagt wird und
- das zum Gefäßinneren weisende und als Verschleißelement ausgebildete Verschleißteil (30) mit der im Gefäß befindlichen Metallschmelze in Kontakt steht,
dadurch gekennzeichnet,
daß das Verschleißteil (30) seinerseits aus zwei Teilen (31, 32) besteht, nämlich
a) einem metallischen Bauteil (32), das überwiegend aus einem mit der Schmelze vergleichbaren Werkstoff besteht, wobei der Querschnitt des metallischen Bauteils (32) an der Stirn (21) des Kühlteils (20) eine dieser angepaßte Außenkontur (33) besitzt, und
wobei das metallische Bauteil (32) eine Form aufweist, die die Strömung des während des Betriebs im Stirnbereich aufgeschmolzenen Elektrodenmaterials wie auch der Metallschmelze behindert, sowie
b) einem Bauteil (31) aus hochtemperaturfestem Werkstoff, das eine mit dem metallischen Bauteil (32) komplementäre Form besitzt,
und daß das metallische Bauteil (32) und das hochtemperaturfeste Bauteil (31) des Verschleißteils (30) koaxial zur Mittelachse der Bodenelektrode (11) angeordnet ist.

2. Bodenelektrode nach Anspruch 1,
dadurch gekennzeichnet,
daß die die Strömung des schmelzflüssigen Materials behindernde Form des metallischen Bauteils (32) aus aufeinander gestapelten Zylindern (34) gebildet wird, wobei in Richtung Kühlteil (20) der jeweilige Zylinderdurchmesser zunimmt.

3. Bodenelektrode nach Anspruch 1,
dadurch gekennzeichnet,
daß die die Strömung des schmelzflüssigen Materials behindernde Form des metallischen Bauteils (32) ein parallel zur Mittenachse (I) in Richtung Kühlteil (20) sich vergrößernder Kegelstumpf ist, dessen dem Gefäßinneren (10) zugewandte Stirnfläche einen Wert von kleiner als 1/2 x A der Querschnittsfläche des Kühlteils (20) besitzt.

4. Bodenelektrode nach Anspruch 1,
dadurch gekennzeichnet,
daß der metallische Bauteil (32) in Form von als koaxial zur Mittenachse (I) geführte Hülsen (39) ausgestaltet ist.

5. Bodenelektrode nach Anspruch 1,
dadurch gekennzeichnet,
daß die Querschnittsfläche des metallischen Bauteils (32) der möglichen Stromübertragung angepaßt ist und von der Querschnittsfläche (A) des Kühlteils (20) kontinuierlich bis zu einem Maximum im Bereich 2/3 x L der Länge des Verschleißteils (30) verbreitert ausgebildet ist und im weiteren Verlauf zum Gefäßinneren hin auf eine Fläche kleiner 1/2 A reduziert wird.

6. Bodenelektrode nach Anspruche 3 oder 6,
dadurch gekennzeichnet,
daß das Verschleißteil (30) zylindrisch mit dem gleichen Querschnitt A des Kühlteils (20) ausgebildet ist, wobei das Verhältnis des metallischen Volumens V met des Verschleißteils (30) zum Abstand L der Stirn (21) des Kühlteils (20) zur Schmelze sich verhält wie V met/L = 30 bis 300 (cm³/cm).

7. Bodenelektrode nach Anspruch 6,
dadurch gekennzeichnet,
daß das aus hochtemperaturfestem Werkstoff aufgebaute Bauteil (31) aus standfestem Material, wie z.B. aus Zirkonoxid, besteht.

## Claims

1. A bottom electrode (11) for a metallurgical vessel operated with direct current, consisting of two parts (20, 30), made of different materials, which can be connected together, of which
- the cooling part (20) arranged substantially outside the vessel bottom and pointing towards the exterior of the vessel is supplied with a cooling agent, and
- the wearing part (30) pointing towards the interior of the vessel and designed as a wearing element is in contact with the molten metal located in the vessel,
characterised in that
the wearing part (30) in turn consists of two parts (31, 32), namely
a) a metallic component (32) which consists predominantly of a material comparable with the melt, the cross-section of the metallic component (32) at the end face (21) of the cooling part (20) having an external contour (33) adapted thereto, and
the metallic component (32) having a form which hinders the flow of the electrode material which is melted during operation in the end region and also of the molten metal, and
b) a component (31) of high-temperature material which has a form complementary with the metallic component (32),
and that the metallic component (32) and the high-temperature component (31) of the wearing part (30) is arranged coaxially to the centre axis of the bottom electrode (11).

2. A bottom electrode according to Claim 1,
characterised in that the shape of the metallic component (32) which hinders the flow of the molten material is formed by cylinders (34) stacked one on top of another, the respective cylinder diameter increasing towards the cooling part (20).

3. A bottom electrode according to Claim 1,
characterised in that the shape of the metallic component (32) which hinders the flow of the molten material is a truncated cone which enlarges parallel to the centre axis (I) towards the cooling part (20), the end face of which cone which faces the interior (10) of the vessel has a value of less than 1/2 x A of the cross-sectional surface area of the cooling part (20).

4. A bottom electrode according to Claim 1,
characterised in that the metallic component (32) is in the form of sleeves (39) guided coaxially to the centre axis (I).

5. A bottom electrode according to Claim 1,
characterised in that the cross-sectional surface area of the metallic component (32) is adapted to the possible current transfer and is designed to widen from the cross-sectional surface (A) of the cooling part (20) continuously up to a maximum in the region of 2/3 X L of the length of the wearing part (30), and in its further course towards the interior of the vessel is reduced to a surface area of less than 1/2 A.

6. A bottom electrode according to Claims 3 or 6,
characterised in that the wearing part (30) is designed to be cylindrical with the same cross-section A of the cooling part (20), the ratio of the metallic volume V met of the wearing part (30) to the distance L of the end face (21) of the cooling part (20) from the melt being V met/L = 30 to 300 (cm³/cm).

7. A bottom electrode according to Claim 6,
characterised in that the component (31) constructed of high-temperature material is made of stable material, such as zirconium oxide.

## Revendications

1. Electrode de fond (11) destinée à un récipient métallurgique fonctionnant en courant continu et constituée de deux pièces (20, 30) pouvant être assemblées et construites en des matériaux différents, parmi lesquelles
- la pièce de refroidissement (20) dirigée vers l'extérieur du récipient et agencée globalement en dehors du fond de récipient est alimentée en un produit réfrigérant, et
- la pièce d'usure (30) dirigée vers l'intérieur du récipient et conçue comme un élément d'usure est en contact avec le bain de fusion se trouvant dans le récipient,
caractérisée en ce que la pièce d'usure (30) est constituée pour sa part de deux pièces (31, 32), à savoir
a) une pièce métallique (32) qui est construite principalement en un matériau comparable à la matière en fusion,
la section de la pièce métallique (32) au bout (21) de la pièce de refroidissement (20) ayant un contour extérieur (33) adapté à ce bout (21), et
la pièce métallique (32) ayant une forme qui empêche l'écoulement du matériau d'électrode, fondu dans la zone du bout pendant l'exploitation, comme de la matière en fusion,
b) et une pièce (31) qui est construite en un matériau résistant aux hautes températures et qui a une forme complémentaire de celle de la pièce métallique (32),
et la pièce métallique (32) et la pièce résistant aux hautes températures (31) de la pièce d'usure (30) sont coaxiales à l'axe de l'électrode de fond (11).

2. Electrode de fond selon la revendication 1,
caractérisée en ce que la forme, empêchant l'écoulement du matériau en fusion, de la pièce métallique (32) est faite de cylindres (34) empilés les uns sur les autres, le diamètre des différents cylindres augmentant en direction de la pièce de refroidissement (20).

3. Electrode de fond selon la revendication 1,
caractérisée en ce que la forme, empêchant l'écoulement du matériau en fusion, de la pièce métallique (32) est un cône tronqué, parallèle à l'axe central (I) et s'agrandissent en direction de la pièce de refroidissement (20), dont la surface du bout dirigé vers l'intérieur (10) du récipient a une valeur inférieure à 1/2 x A de la surface de section de la pièce de refroidissement (20).

4. Electrode de fond selon la revendication 1,
caractérisée en ce que la pièce métallique (32) est construite en forme de manchon (39) coaxial à l'axe central (I).

5. Electrode de fond selon la revendication 1,
caractérisée en ce que la surface de section de la pièce métallique (32) est adaptée à la transmission de courant et s'élargit continûment de la surface de section A de la pièce de refroidissement (20) à un maximum de l'ordre de 2/3 x L de la longueur de la pièce d'usure (30) et se rétrécit ensuite vers l'intérieur du récipient jusqu'à une surface inférieure à 1/2 A.

6. Electrode de fond selon la revendication 3 ou 6,
caractérisée en ce que la pièce d'usure (30) est construite cylindrique avec la même section A de la pièce de refroidissement (30), le rapport du volume métallique V met de la pièce d'usure (30) et de la distance L du bout (21) de la pièce de refroidissement (20) à la matière en fusion est tel que : V met / L = 30 à 300 (cm³/cm).

7. Electrode de fond selon la revendication 6,
caractérisée en ce que la pièce (31) construite en un matériau résistant aux hautes températures est en un matériau stable, par exemple de l'oxyde de zirconium.
